# EUROPEAN PATENT APPLICATION

(11) **EP 4 203 264 A1**
(43) Date of publication of application: **28.06.2023**
(21) Application number: 21217829.7
(22) Date of filing: 27.12.2021
(51) Int. Cl.: H02K 3/50

(54) **ELECTRIC DRIVE FOR A VEHICLE**

(71) Applicant: Valeo eAutomotive Germany GmbH, 91056 Erlangen (DE)
(72) Inventor: FINGER-ALBERT, Christian, 97616 Bad Neustadt a.d.Saale (DE); GOPALAKRISHNAN, Rameshkumar, Salai, Navalu, Chennai (IN); BALASUBRAMANIAN, Maniprasath, Salai, Navalu, Chennai (IN)
(74) Representative: Valeo Powertrain Systems

(57) **Abstract**

Electric drive (1) for a vehicle (100), comprising: an electric machine (2) having a stator (3), which comprises a stator core (12) with a longitudinal axis (23) and a stator winding (13), the stator winding (13) forming a winding head (14) at an axial face side (15) of the stator core (12); an inverter (6); supply busbars (8a-c) connected to the inverter (6); and a terminal device (9), comprising
- an insulation body (22) comprising a base (24) and a plurality of concentrically arranged ribs (25a-d) protruding from the base (24) into an axial direction and extending along a circumferential direction,
- a plurality of accommodation spaces (26a-c), each formed between a respective pair of radially adjacent ribs (25a-d), and
- a plurality of phase connection busbars (27a-c), each
- being arranged inside one of the accommodation spaces (26a-c) and insulated against the winding head (14) by the insulation body (22),
- having a cross-sectional area with opposing long sides (34) extending along the axial direction and with opposing short sides (35) connecting the long sides (34) and
- having a phase connection section (36d) connected to one of the supply busbars (8a-c), a coil connection section (36a-c) being connected to the stator winding (13) and a bar section (37a-d) extending between the phase connection section (36d) and the coil connection section (36a-c);

wherein the long sides (34) within the phase connection section (36ad) are larger than the long sides (34) within the bar section (37a-d) so that the phase connection section (36d) protrudes out of the accommodation space (26a-c), wherein the ribs (25a-c) form mounting spaces arranged with an axial distance to the bar section (37c) of a respective phase connection busbar (27a-c),
wherein the supply busbars (8a-c) are mounted inside the mounting spaces.

## Description

The present invention refers to an electric drive for a vehicle.

US 2009/0039720 A1 discloses a rotating electric machine comprising a terminal module. The terminal module comprises a rail, having a plurality of grooves extending in the circumferential direction and being spaced apart from each other in a radial direction and a plurality of busbars fitted in the grooves.

In electric drives, terminal devices are commonly used to provide an external connection of a stator winding. Therein, the terminal device comprises an insulation body, a plurality of accommodations spaces formed by the insulation body and a plurality of phase connection busbars being arranged inside the accommodation spaces. The phase connection busbars are provided to be connected to the stator winding and to supply busbars being connected to an inverter.

It is an object of the invention to provide an improved possibility for connecting supply busbars to a terminal device of an electric drive for a vehicle.

According to the invention, this object is solved by an electric drive for a vehicle, comprising: an electric machine having a stator, which comprises a stator core with a longitudinal axis and a stator winding, the stator winding forming a winding head at an axial face side of the stator core; an inverter; supply busbars connected to the inverter; and a terminal device, comprising an insulation body comprising a base and a plurality of concentrically arranged ribs protruding from the base into an axial direction and extending along a circumferential direction, a plurality of accommodation spaces, each formed between a respective pair of radially adjacent ribs, and a plurality of terminal busbars, each being arranged inside one of the accommodation spaces and insulated against the winding head by the insulation body, having a cross-sectional area with opposing long sides extending along the axial direction and with opposing short sides connecting the long sides and having a phase connection section connected to one of the supply busbars, a coil connection section being connected to the stator winding and a bar section extending between the phase connection section and the coil connection section, wherein the long sides within the phase connection section are larger than the long sides within the bar section so that the phase connection section protrudes out of the accommodation space, wherein the ribs form mounting spaces arranged with an axial distance to the bar sections of a respective phase connection busbar, wherein the supply busbars are mounted inside the mounting spaces.

The electric drive for a vehicle according to the invention comprises an electric machine. The electric machine has a stator. The stator comprises a stator core with a longitudinal axis. The stator further comprises a stator winding. The stator winding forms a winding head at an axial face side of the stator core. The electric drive further comprises an inverter. The electric drive further comprises supply busbars. The supply busbars are connected to the inverter. The electric drive further comprises a terminal device. The terminal device comprises an insulation body. The insulation body comprises a base. The insulation body further comprises a plurality of concentrically arranged ribs. The ribs protrude from the base into an axial direction. The ribs extend along a circumferential direction. The terminal device further comprises a plurality of accommodation spaces. Each accommodation space is formed between a respective pair of radially adjacent ribs. The terminal device further comprises a plurality of terminal busbars. Each phase connection busbar is arranged inside one of the accommodation spaces. Each phase connection busbar is insulated against the winding head by the insulation body. Each phase connection busbar has a cross-sectional area. The cross-sectional area has opposing long sides extending along the axial direction. The cross-sectional area further has opposing short sides connecting the long sides. Each phase connection busbar further has a phase connection section connected to one of the supply busbars. Each phase connection busbar further has a coil connection section being connected to the stator winding. Each phase connection busbar further has a bar section extending between the phase connection section and the coil connection section. The long sides within the phase connection section are larger than the long sides within the bar section so that the phase connection section protrudes out of the accommodation space. The ribs form mounting spaces. The mounting spaces are arranged with an axial distance to the bar section of a respective phase connection busbar. The supply busbars are mounted inside the mounting spaces.

The terminal device of the inventive electric drive has dedicated mounting spaces for the supply busbars in the ribs, which allow to securely position the supply busbars with regard to the phase connections sections. As the mounting spaces have a defined axial distance to the bar section, sufficient air and creepage distances can be provided so as to increase electrical safety of the electric drive.

The terms "axial direction", "circumferential direction" and "radial direction" may refer to the longitudinal axis of the stator core. Preferably, the base is a flat and/or annularly shaped part of the insulation body. The base may comprise a first side and a second side opposing the first side with regard to the axial direction. The ribs may protrude from the first side. The second side may face the stator. Each accommodation space may be circumferentially closed by two members of the insulation body protruding from the base into the axial direction and extending radially between the respective pair of radially adjacent ribs that form the accommodation space.

By virtue of the long and short sides, the arrangement of the phase connection busbars inside the accommodation spaces may be considered as vertical. Thereby, the long sides can provide a large contact area for terminal conductors of the stator to be electrically connected with the phase connection busbar. The supply busbars may be connected electrically and mechanically, particularly by means of welding, with the phase connection section.

Preferably, the ribs comprise protrusions extending into the axial direction away from the base at angular positions in the circumferential direction, where the phase connection sections are arranged, the mounting spaces being formed within the protrusions. Particularly, the protrusions allow to axially space the mounting spaces with regard to the bar section.

Preferably, each protrusion has an axial deepening that forms the mounting space. The axial deepening may inhibit a movement of the supply busbar along the circumferential direction so as to be safely secured within the mounting space.

Preferably, first to n-th accommodation spaces are provided, the accommodation spaces being arranged radially according to their numbering, wherein first to (n+1)-th ribs are provided, the i-th and the (i+1)-th rib forming the i-th accommodation space for all 1 ≤ i ≤ n, wherein the first to j-th rib form the mounting space for the supply busbar connected to the phase connection busbar arranged inside the j-th accommodation space for all 1 ≤ j ≤ n, wherein n, i, and j are integers, wherein n ≥ 2. More preferably, n is equal to 3 or 6.

Therein, the phase connection section of the phase connection busbar arranged in the k-th accommodation space may be adjacent to the phase connection section of the phase connection busbar arranged in the (k+1)-th accommodation space along a predefined circumferential direction for all 1 ≤ k ≤ (n-1), wherein k are integers.

Preferably, each phase connection busbar has a plurality of bends and a plurality of straights, the bends and straights forming a polygonal shape of the phase connection busbar. The phase connection section and/or the coil connection section may protrude from the straights of the phase connection busbar.

It is also preferred that each accommodation space has the shape of a sector of an annulus. When combining the polygonal shape of the phase connection busbar with the annular shape of the accommodation space, the different shapes provide a more stable arrangement and fixation of the phase connection busbars inside the insulation body.

Therein, the sector of the annulus preferably extends along an angular range in the circumferential direction of at least 180°, preferably at least 210°, more preferably at least 240°. Preferably, the sectors extend along an angular range in the circumferential of at most 350°, more preferably at most 340°.

Preferably, the bends touch one rib of the pair of adjacent ribs that form the accommodation space such that the phase connection busbar is fitted into the accommodation space by a retraction force. Thereby, the phase connection busbars may be force-fitted between the ribs so as to increase stability.

Furthermore, the bends may touch one rib of the pair of adjacent ribs that form the accommodation space such that the phase connection busbar is fitted into the accommodation space by a retraction force. Thereby, the phase connection busbars may be force-fitted between the ribs so as to increase stability.

Preferably, the accommodation space comprises clearances formed between the rib touched by the bends and the straights. Particularly, the straights may extend without contact to a radially outer rib of the pair of adjacent ribs.

Furthermore, the accommodation space may comprise clearances formed between the other rib of the pair of adjacent ribs and the bends. Particularly, the phase connection busbars are arranged such inside the accommodation spaces that only the bends touch the radially outer rib of the pair of adjacent of ribs.

Alternatively or additionally, at least a part of the straights touches the other rib of the pair of adjacent ribs. Thereby, an additional support inside the accommodation space may be provided by the insulation body.

The insulation body may further comprise openings penetrating the base at angular positions in the circumferential direction, where a respective coil connection section is arranged. By means of the coil connection sections and the openings in the base, terminal conductors of the stator can be led through the openings so as to be connected with the core connection sections of the phase connection busbar. As the coil connection sections protrude from the straights into the axial direction, the terminal conductors may be attached to the long sides of the straights, where a flat connection area is provided.

Preferably, one rib of the pair of ribs forming a respective one of the accommodation spaces for the phase connection busbars forms a radial recess such that the openings are surrounded on three sides by the rib. Thereby, a position of the connection terminals is fixed in the circumferential direction so as to provide sufficient air and creepage distances that avoid a short-circuit and to securely arrange the terminal connection with regard to the phase connection busbar.

It is further preferred that the long sides within the phase connection section are larger than the long sides within a respective coil connection sections. Thereby, sufficient space for attaching a further busbar, particularly carrying the current supplied by the inverter, is provided.

Each phase connection busbar may comprise plural coil connection sections connected to a further bar section. Preferably, the long sides within one of the bar sections that extends between the phase connection section and one of the core connection sections are larger than the long sides within a respective other one of the bar sections. By having larger long sides between the phase connection section and the one of the coil connection sections, the cross-section of the bar sections is enlarged so as to reduce of the ohmic resistance of the bar section, through which a current for both coil connection terminals flows.

Preferably, each phase connection busbar extends along an angular range in the circumferential direction of at least 180°, preferably at least 220°, more preferably at least 230° and/or at most 300°, preferably at most 270°, more preferably at most 260°. Such a phase connection busbar allows to connect coil connection terminals of the same phase, which are distributed over a wide range in the circumferential direction.

Furthermore, the terminal device may comprise a neutral connection busbar, wherein one of the ribs and a further rib form a further accommodation space, inside which the neutral connection busbar is arranged. This allows to integrate neutral connections as well as phase connections in one terminal device. All statements concerning the phase connection busbar may refer to the neutral connection busbar as well, except that the neutral connection busbar lacks phase connections sections.

The neutral connection busbar may be arranged radially inside with respect to the phase connection busbars. The neutral connection busbar may furthermore extend along a larger angular range in the circumferential direction then the phase connection busbars. This allows to connect core connection terminals, which are distributed over an even wider circumferential range. However, with regard to specific application requirements it is also possible that neutral connection busbar is arranged radially outside with respect to the phase connection busbars and/or that the neutral connection busbar extends along an equal or smaller angular range in the circumferential direction then the phase connection busbars.

Advantageously, the insulation body comprises openings penetrating the base at angular positions of the circumferential direction, where a respective coil connection section of the neutral connection busbar is arranged. Preferably, the openings are radially open towards a central opening of the insulation body. Particularly, higher tolerances for terminal conductors to be connected to the neutral connection busbar can be allowed, when the openings are radially open. However, with regard to specific implementations, particularly with regard to a certain winding scheme, it is also possible that the openings are not radially open towards the central opening, particularly the neutral connection busbar may be disposed in an accommodation space having accommodation spaces for two phase connection busbars on both radial sides.

The terminal device according to the invention may further comprise at least three, preferably at least six, legs extending from the base into the axial direction away from the ribs. Such legs, preferably protruding from the second side of the base, may define a predetermined distance between the base and the stator when mounting the terminal device. More preferably, each leg has a cross-sectional area perpendicular to the axial direction with a, particularly radiused, edge pointing radially inwards. Such an edge allows that a resin sprayed on the stator and the terminal device or applied by dipping after attachment can flow away so as to avoid undesired accumulations of the resin. The legs may touch the face side of the stator core so as to space apart the base from the face side.

A cross-section of a respective leg may have the shape of a radiused triangle with eccentric sides. The triangle may be an isosceles triangle, particularly with a base pointing radially outward. The legs may be tapered along a direction away from the insulation body.

Further, the base of the terminal device according to the invention may comprise a plurality of through-holes. Such a through-holes, preferably arranged in sections, where no busbar is arranged, and/or circumferentially distributed between each pair of adjacent ribs, allow the resin to flow therethrough so as to avoid corresponding accumulations in the area, where the through-holes are provided.

The base may comprise a further opening, preferably radially open towards the central opening, and a protrusion formed at an edge of the opening and extending into the same axial direction as the ribs, the protrusion being configured to guide a temperature sensor. The protrusion may have the shape of a half-circle.

Preferably, the electric machine further comprises a rotor being rotatably mounted inside the stator. The rotor may be permanently or electrically excited. The electric machine may be a synchronous machine or an induction machine. The stator core may be formed by a plurality of axially laminated and/or mutually insulated sheets of metal. Preferably, the stator winding is a hairpin winding.

Preferably, the stator winding comprises a plurality of coils, each coil being formed by a first terminal conductor, a second terminal conductor and further conductors realizing a current path from the first terminal conductors to the second terminal conductor, wherein a respective terminal conductor extends in the axial direction away from the winding head through one of the openings and is connected to one of the coil connection sections. With regard to the stator winding being a hairpin winding, the further conductors are preferably formed segmented conductors each having two legs, the legs being connected by a head section, which forms the winding head. At an opposite axial face side, the legs may be connected by means of welding.

Advantageously, the first terminal conductors are connected to the coil connection sections of the phase connection busbars and comprise a first bend to extend along the radial direction between the winding head and the insulation body and a second bend to extend axially through the opening.

Preferably, the second terminal conductors are connected to the neutral connection busbar and extend straightly along the axial direction between the winding head and the insulation body to extend through the opening. However, with regard to specific application requirements it is also possible that the first terminal conductors extend straightly along the axial direction between the winding head and the insulation body to extend through the opening.

Preferably, the second terminal conductors are disposed at an inner diameter of the winding head. However, with regard to specific application requirements it is also possible that the second terminal conductors are disposed at an outer diameter of the winding head or that the second terminal conductors extend out of the winding head at an intermediate position between an outer diameter and an inner diameter of the winding head.

Preferably, the electric drive comprises a temperature sensor guided through the opening in the base and thermally coupled to the winding head.

Further details and advantages of the present invention are described in the following embodiments and in the drawings. The drawings are schematic drawings and show:
- Fig. 1: a block diagram of an embodiment of an electric drive according to the invention
- Fig. 2: a perspective view of a stator of the electric drive, a terminal device and the supply busbars according to the embodiment;
- Fig. 3: a perspective view of the terminal device;
- Fig. 4: an exploded view of terminal device;
- Fig. 5: a bottom view of the terminal device;
- Fig. 6: a top view of the terminal device when being attached to the stator;
- Fig. 7: a detailed view of Fig. 6;
- Fig. 8: a detailed view of a phase connection busbar;
- Fig. 9: cross-sectional views of the busbar shown in Fig. 8;
- Fig. 10: a cross-sectional view of the terminal device along a section X-X in Fig. 6;
- Fig. 11: a detailed perspective view of the terminal device and the connection assembly; and
- Fig. 12: a cross-sectional view through one of the legs.

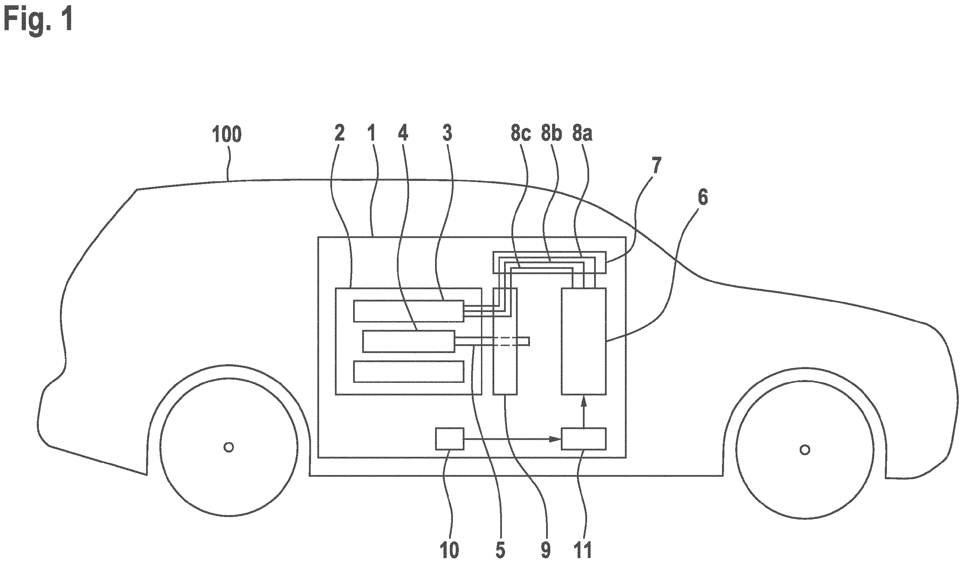

Fig. 1 is a block diagram of an embodiment of an electric drive 1. The electric drive 1 is configured to drive a vehicle 100, such as a battery electric vehicle (BEV) or a hybrid vehicle.

The electric drive 1 comprises an electric machine 2 having a stator 3 and a rotor 4 being rotatably mounted inside the stator 3. Furthermore, the electric machine 2 comprises a shaft 5. Exemplarily, the electric machine is depicted as a three-phase permanent or electrically excited synchronous machine but may alternatively be an induction machine.

The electric drive 1 further comprises an inverter 6, exemplarily functioning as three-phase AC voltage supply. The inverter 6 is connected via a connection assembly 7 having three supply busbars 8a, 8b, 8c to a terminal device 9 of the electric drive 1.

The electric drive 1 further comprises a temperature sensor 10 configured to detect a temperature in the stator 3 and to provide sensor signals to a controller 11, which is connected to the inverter 6.

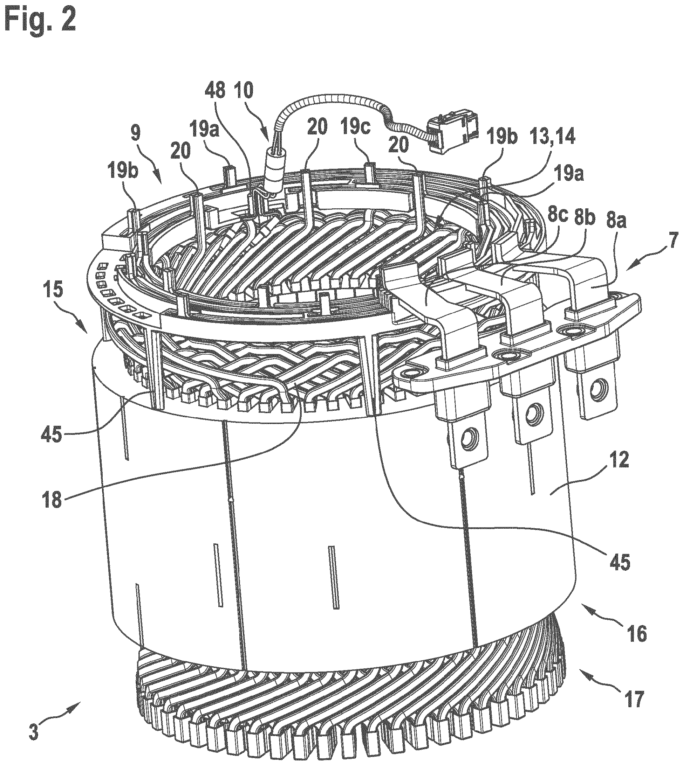

Fig. 2 is a perspective view of the stator 3 and the terminal device 9. Furthermore, the temperature sensor 10 and the connection device 7 with the supply busbars 8a, 8b, 8c are depicted.

The stator 3 comprises a stator core 12 formed by a plurality of laminated and mutually insulated metal sheets. The stator 3 further comprises a stator winding 13 forming a winding head 14 at the first axial face side 15 of the stator core. At the second axial face side 16 opposing the first axial face side 15 a further winding head 17 of the stator winding 13 is formed.

The present embodiment, the stator windings 13 is formed as a hairpin winding. Thus, the stator winding 13 comprises a plurality of interconnected, segmented U-shaped conductors 18, which have a head section forming the winding head 14 and leg sections connected by welding and forming the winding head 17.

The stator winding 13 comprises a plurality of coils. Each coil is formed by the first terminal conductor 19a, 19b, 19c, the second terminal conductor 20 and further conductors realizing a current path from the first terminal conductors 19a, 19b, 19c to the second terminal conductor. A respective terminal conductor 19a, 19b, 19c, 20 extends in radial direction away from the winding head 13. The further conductors are realized by the U-shaped conductors 18, whereas the terminal conductors 19a, 19b, 19c, 20 are formed by conductors having free end instead of a head portion and which are connected to the conductors 18 on the second axial face side 16.

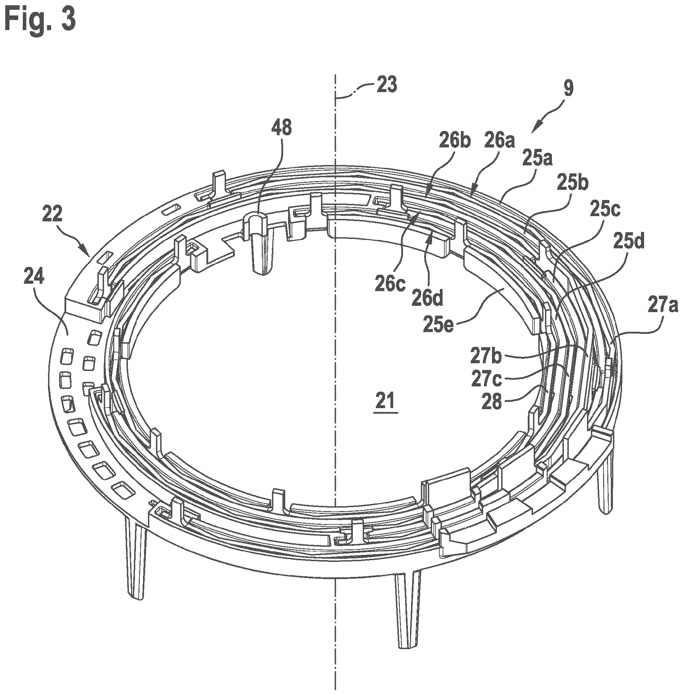

Fig. 3 to Fig. 5 show the terminal device 9. Therein, Fig. 3 is a perspective view,

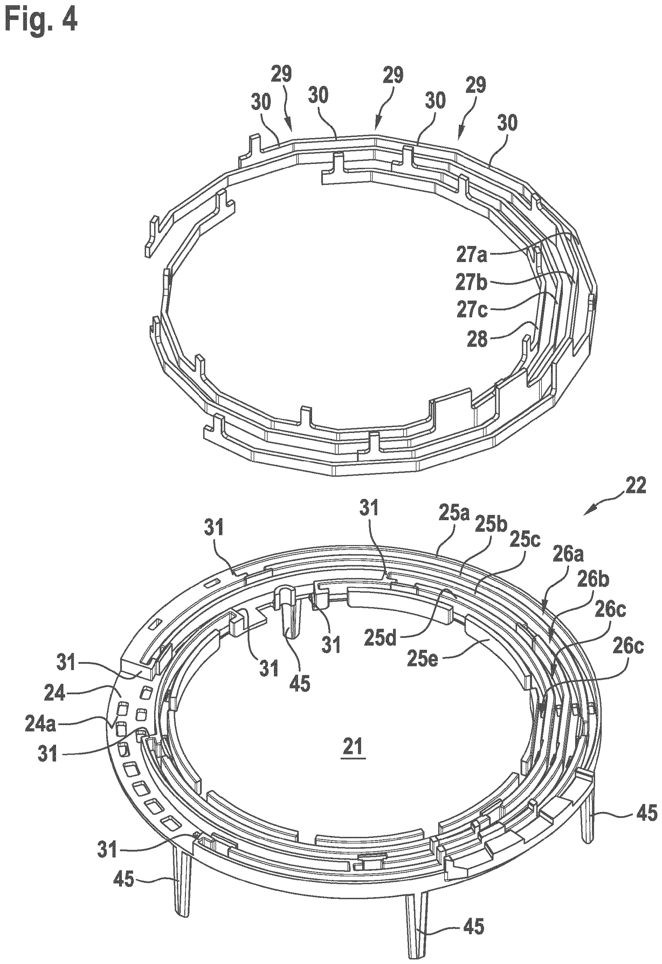

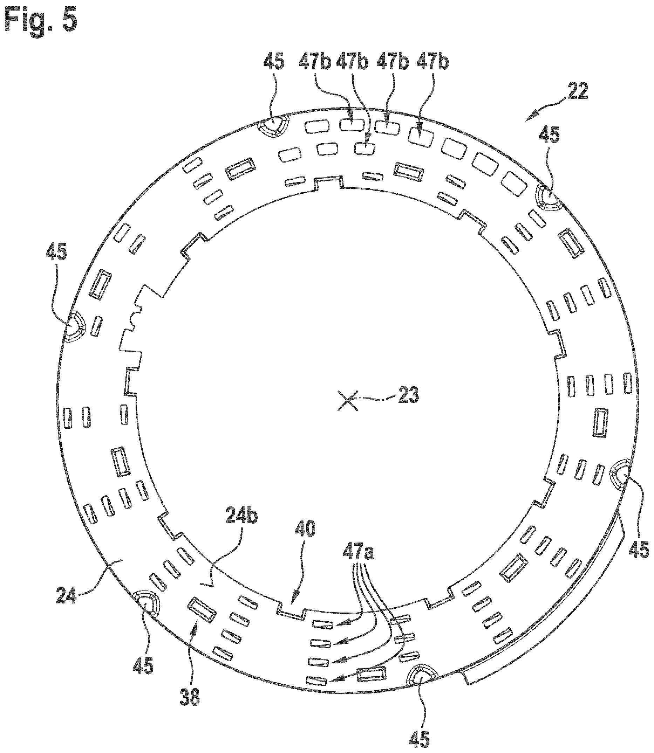

Fig. 4 is an exploded view and Fig. 5 is a bottom view.

The terminal device 9 comprises a central opening 21, through which the shaft 5 (see Fig. 1) is led. Further, the terminal device 9 comprises an insulation body 22 surrounding the central opening 21 about a longitudinal axis, which extends through the central opening 21. Therein, the longitudinal axial corresponds to a longitudinal axis 23 of the stator core 12. The insulation body 22 comprises a plate-shaped base 24 with a first side 24a and an opposing second side 24b. Further, the insulation body 22 comprises a plurality of concentrically arranged ribs 25a to 25e. The ribs 25a to 25e protrude from the first side 24a of the base 24 into an axial direction. Each rib 25a to 25e extends along a circumferential direction.

Between a respective pair of radially adjacent ribs 25a to 25e accommodation spaces 26a to 26d are formed. In the present embodiment five ribs 25a to 25e forming four accommodation spaces 26a to 26d are provided. Therein, the first rib 25a, being the radially outermost rib, and the radially adjacent second rib 25b form the first accommodation space 26a, the second rib 25b and the adjacent third rib 25c form the second accommodation space 26b, the third rib 25c and the adjacent fourth rib 25d form the third accommodation space 26c and the fourth rib 26d and the fifth rib 25e, being the innermost rib, form the fourth accommodation space 26d.

The terminal device 9 further comprises a plurality of busbars 27a, 27b, 27c, 28. Each busbar 27a, 27b, 27d, 28 is arranged inside one of the accommodation spaces 26a to 26d. The busbars 27a, 27b, 27c are phase connection busbars and are arranged inside the first, the second and the third accommodation spaces 26a, 26b, 26d. The busbar 28 is formed as neutral connection busbar and arranged inside the fourth accommodation space 26d.

As can be seen best in Fig. 4, each busbar 27a, 27b, 27c, 28 has a plurality of bends 29 and a plurality of straights 30. The bends 29 and the straights 30 form a polygonal shape of the busbars 27a, 27b, 27c, 28. Exemplarily, in the present embodiment the phase connection busbars 27a, 27b, 27c each have twelve bends and thirteen straights 30 and the neutral connection busbar 28 has sixteen bends 29 and seventeen straights 30.

Each accommodation space 26a to 26d has the shape of the sector of an annulus. Consequently, the ribs 25a to 25e have the shape of the sector of an annulus as well. In the present embodiment, each accommodation space 26a to 26c for the phase connection busbars 27a to 27c extends along an angular range in the circumferential direction of about 250°. The neutral connection busbar 28 extends along an angular range in the circumferential direction of about 330°. The angular extent of the respective busbar 27a, 27b, 27c, 28 corresponds substantially to the angular range of the accommodation space 26a to 26d, inside which the respective busbar 27a to 27c, 28 is arranged.

Each accommodation space 26a to 26d is circumferentially closed by two members 31 of the insulation body 22. The members 31 extent radially between a respective pair of radially adjacent ribs 25a to 25e and protrude from the base 24 into the axial direction.

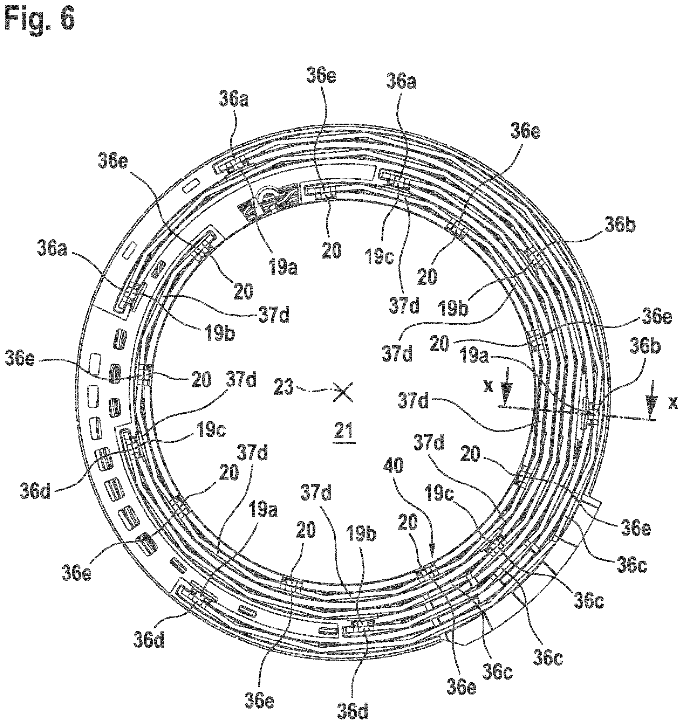

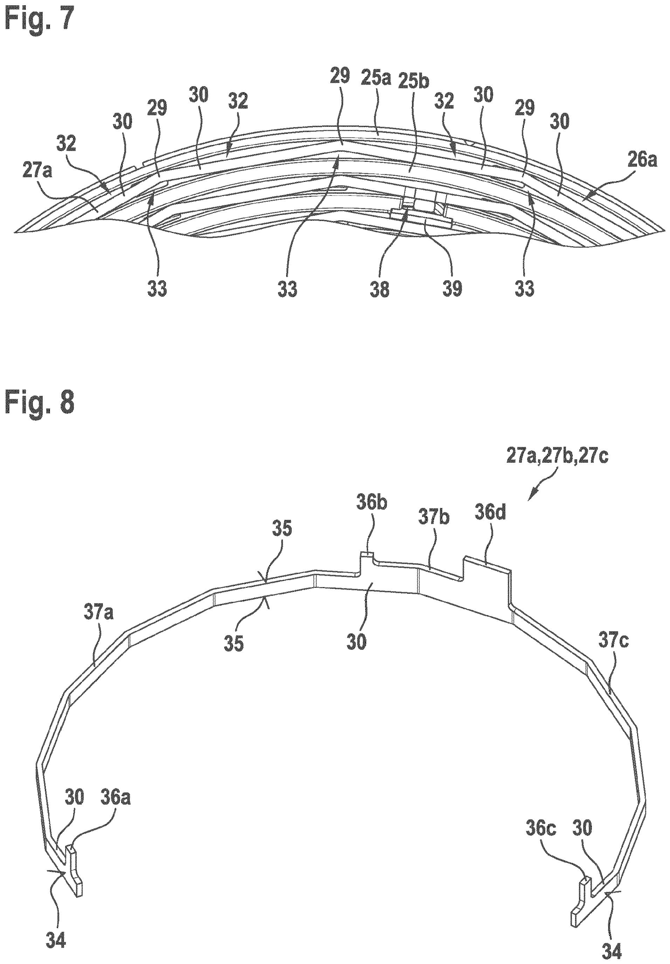

Fig. 6 and Fig. 7 show the terminal device 9 when being attached to the stator 3, wherein Fig. 6 is a top view and Fig. 7 is a detailed view thereof.

As representatively shown in Fig. 7 with regard to the first and second ribs 25a, 25b, the first accommodation space 26a and the busbar 27a, the bends 29 touch one rib 25a of the pair of adjacent ribs 25a, 25b that form the accommodation space 26a such that the busbar 27a is fitted into the accommodation space 26a by a retraction force. Therein, the accommodation space 26a comprises clearances 32 formed between the rib 25a touched by the bends 29 and the straights 30. Also, the accommodation space 26a comprises clearances 33 formed between the other rib of the pair of adjacent ribs 25b and the bends 29. At least a part of the straights 30 touches the other rib of the pair of adjacent ribs 25b. Consequently, the polygonal busbar 27a is force-fitted into the annular accommodation space 26a.

Fig. 8 is a detailed perspective view of a phase connection busbar 27a, 27b, 27c.

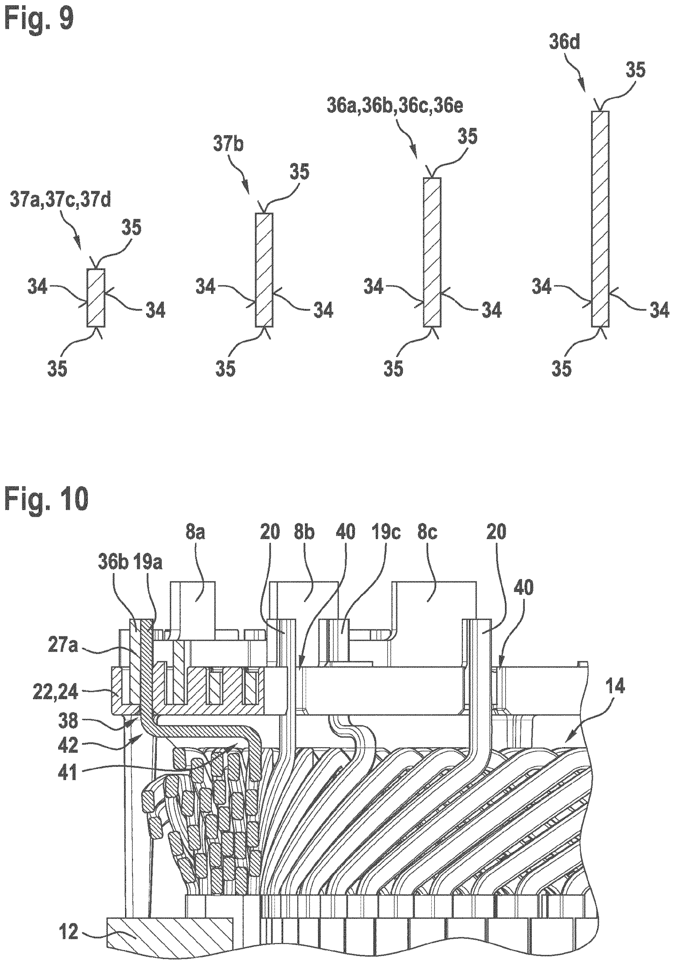

Fig. 9 shows cross-sectional views of the busbar 27a, 27b, 27c depicted in Fig. 8

Each busbar 27a, 27b, 27c, 28 has a cross-sectional area with opposing long sides 34 extending along the axial direction and with opposing short sides 35 connecting the long sides 34. Each busbar comprises 27a, 27b, 27c, 28 comprises plural connection sections 36a to 36e being arranged at different angular positions along the circumferential direction. Further, each busbar 27a, 27b, 27c comprises bar sections 37a to 37d extending between the connection sections 36a to 36e. Within the connection sections 36a to 36e the long sides 34 are larger than the long sides 34 within the bar sections 37a to 37d as can be seen best in Fig. 9.

The connection sections 36a, 36b, 36c, 36e are formed as coil connection sections protruding from the straights 30. As can be seen best in Fig. 7, the insulation body comprises openings 38, 40 penetrating the base 24 at angular positions of the circumferential direction, where a respective coil connection section 36a, 36b, 36c, 36e is arranged.

With regard to the phase connection busbars 27a, 27b, 27c, representatively shown in Fig. 8, one connection section 36d is formed as phase connection section. The phase connection sections 36d are connected to the supply busbars 8a, 8b, 8c (see Fig. 2). The other connection sections 36a, 36b, 36c are formed as coil connection sections. The coil connection sections 36a, 36b, 36c are connected to the first terminal conductors 19a, 19b, 19c, which are led through the openings 38. Therein, the radially inner rib 25b, 25c, 25d of the pair of ribs 25a to 25d forming a respective one of the accommodation spaces 26a, 26b, 26c for the phase connection busbars 27a, 27b, 27c forms radial recesses 39 such that the openings 38 are surrounded on three sides by the rib 25b, 25c, 25d.

The long sides 34 within the phase connection section 36d are larger than the long sides 34 within the coil connection sections 36a, 36b, 36c. Further, the long sides 34 within one of the bar sections 37b that extends between the phase connection section 36d and one of the coil connection sections 36b are larger than the long sides 34 within a respective other one of bar sections 37a, 37c. As the current supplied by means of the phase connection section 36c splits up behind the coil connection section 36b so as to flow into one of the first terminal conductors 19a, 19b, 19c and to flow further to the coil connection section 36a, the larger long sides 34 of the bar section 37b provide a larger cross-sectional area for carrying a respective higher amount of current than the bar section 37a.

With regard to the neutral connection busbar 28, only coil connection sections 36e are provided, which are formed correspondingly to the coil connection sections 36a, 36b, 36c of the phase connection busbars 27a, 27b, 27c. Also, the bar sections 37d of the neutral connection busbar 28 are formed correspondingly to the small bar sections 37a, 37c of the phase connection busbars 27a, 27b, 27c. The coil connection sections 37d of the neutral connection busbar 28 are connected to the second terminal conductors 20, which are led though the openings 40. In contrast to the openings 38 for the first terminal conductors 19a, 19b, 19c, the openings 40 for the second terminal conductors 20 are radially open towards the central opening 21. This allows to handle position tolerances of the second terminal conductors 20, which may be larger than the ones of the first terminal conductors 19a, 19b, 19c.

Fig. 10 is a cross-sectional view of the terminal device along a section X-X in Fig. 6.

The first terminal conductors 19a, 19b, 19c are connected to the coil connection sections 36a, 36b, 36c of the phase connection busbars 27a, 27b, 27c and comprise a first bend 41 to extend along the radial direction between the winding head 14 and the insulation body 22 or the base 24, respectively. Further the terminal conductors 19a, 19b, 19c comprise a second bend 42 to extend axially through the opening 38. In contrast, the second terminal conductors 20 extend straightly along the axial direction between the winding head 40 and the insulation body 22 to extend through the opening 40.

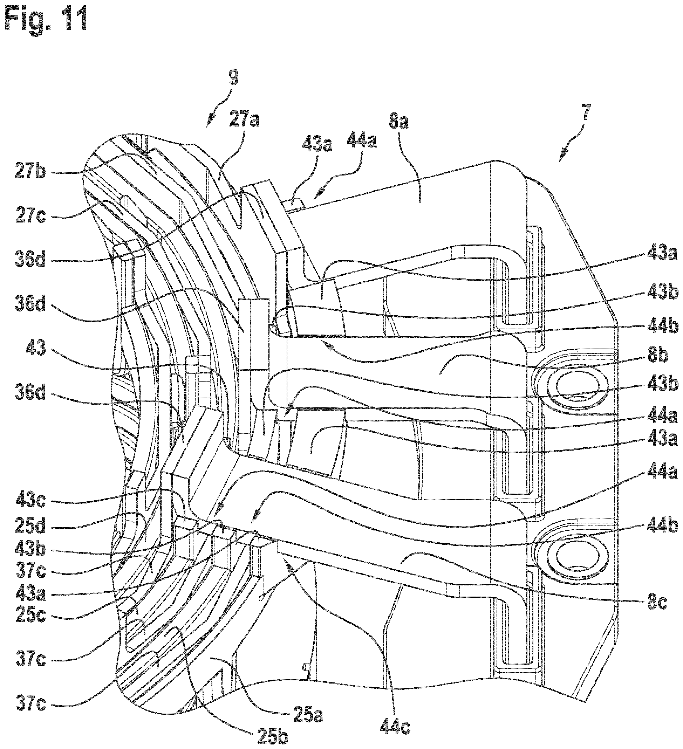

Fig. 11 is a detailed perspective view of the terminal device 9 and the connection assembly 7.

Each radially outer rib 25a, 25b, 25c of a respective pair of ribs 25a to 25d that forms one of the accommodation spaces 26a, 26b, 26c for the phase connection busbars 27a, 27b, 27c comprises a protrusion 43a, 43b, 43c extending into the axial direction away from the base 24 at angular positions in the circumferential direction, where the phase connection sections 36d are arranged. Each protrusion 43a, 43b, 43c has an axial deepening 44a that forms a mounting space for the supply busbar 8a, 8b, 8c of the connection assembly 7 to be connected with the phase connection section 36d. Further deepenings 44b, 44c are provided for those supply busbars bars 8b, 8c that radially cross the phase connection busbar 27a, 27b accommodated in the accommodation space 26a, 26b which is formed by the outer rib 25a, 25b, 25c. The deepenings 44a, 44b, 44c also form the mounting space, which is arranged with an axial distance to the bar section 37c of a respective phase connection busbar 27a, 27b, 27c.

In detail, the first rib 25a, the second rib 25b and the third rib 25c form the mounting space for the supply busbar 8c connected to the phase connection busbar 27c arranged inside the third accommodation space 26c. The first rib 25a and the second rib 25b form the mounting space for the supply busbar 8b connected to the phase connection busbar 27b arranged inside the second accommodation space 26b. Finally, the first rib 25a forms the mounting space for the supply busbar 8a connected to the phase connection busbar 27a arranged inside the first accommodation space 26b. In general terms, the first to j-th rib 25a to 25c form the mounting space for the supply busbar 8a-c connected to the phase connection busbar 27a, 27b, 27c arranged inside the j-th accommodation space 26a, 26b, 26c for all 1 ≤ j ≤ n, wherein n and j are integers, wherein n ≥ 2.

Further, the phase connection section 36d of the phase connection busbar 25a arranged in the first accommodation space 26a is adjacent to the phase connection section of the phase connection busbar 25b arranged in the second accommodation space 26b along a predefined circumferential direction. The phase connection section 36d of the phase connection busbar 25b arranged in the second accommodation space 26b is adjacent to the phase connection section 36d of the phase connection busbar 25c arranged in the third accommodation space 26c along the predefined circumferential direction. In general terms, the phase connection section 36d of the phase connection busbar 25a, 25b, 25c arranged in the k-th accommodation space 26a, b, c is adjacent to the phase connection section of the phase connection busbar 25a, b, c arranged in the (k+1)-th accommodation space 26a, 26b, 26c along a predefined circumferential direction for all 1 ≤ k ≤ (n-1), wherein k are integers.

Again with reference to Fig. 2, Fig. 4 and Fig. 5, the terminal device 9 further comprises six legs 45 extending from the base 24 into the axial direction away from the ribs 25a to 25e. Thus, the ribs extend from the second side 24b of the base 24. The legs 45 are tapered towards the stator 2 and serve as a spacer during mounting the terminal device 9 to the stator 2 or the stator core 12, respectively.

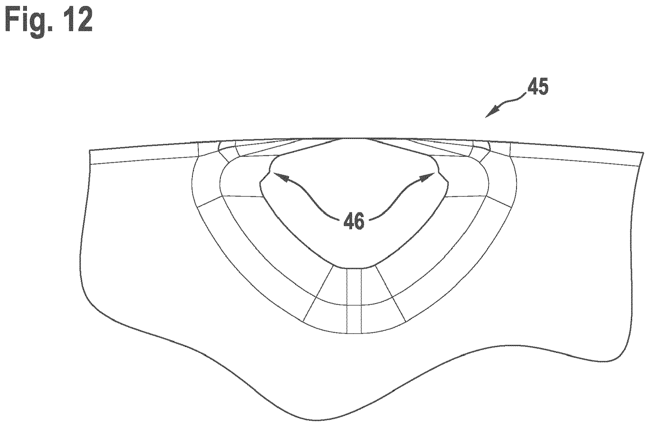

Fig. 12 is a cross-sectional view though one of the legs 45. Each leg 45 has the cross-sectional shape of a radiused triangle with eccentric sides 46a. Specifically, the triangle is an isosceles triangle with its base pointing radially outwards. Therein, each leg 45 has radiused edges 46b , one of which points radially inwards.

Again with reference to Fig. 5, the base 24 comprises a plurality of through-holes 47a, 47b. Several through-holes 47a are arranged between each pair of adjacent ribs 25a to 25e and distributed circumferentially. Several though-holes 47b are arranged in sections of the base 24, where no busbar is provided.

Again with reference to Fig. 2 and Fig. 3, the temperature sensor 10 is guided in a further opening 48 of the base 22. The opening 48 is radially open towards the central opening 21. A protrusion is formed at an edge of the opening 48 and extending into the same axial direction as the ribs 25a to 25e. The protrusion has the shape of a half-circle.

In the following, a method for manufacturing an electric drive 1 is described, wherein reference is made to the above-described embodiments.

The method comprises a step of providing a stator 3 comprising a stator core 12 and a stator winding 13 as described afore. The method further comprises a step of mounting the terminal device 9 to the stator 3 such that the busbars 27a, 27b, 27c are connected to the stator winding 13 and that the insulation body 22 insulates the busbars 27a, 27b, 27c against the winding head 14. The busbars 27a, 27b, 27c are preferably made of blank copper.

Thereafter, the method comprises a step of rotating the stator 3 with the mounted terminal device 9 about the longitudinal axis 23 and a step of impregnating the stator 3 and the terminal device 9 while rotating them by means of a resin . Finally, the method comprises a step of dipping the stator 3 with the mounted terminal device 9 into resin such that the blank copper is covered by the resin. Therein, the edge 46b pointing radially inwards and the through-holes 47a, 47b avoid an undesired accumulation of resin, when sealing the stator 3 and the terminal device 9 by means of the resin. Before the step of dipping the supply busbars 8a, 8b, 8c are connected to the phase connection busbars 27a, 27b, 27c, e.g. by welding.

With regard to further embodiments, the electric machine 2 and/or the inverter 6 may have six phases.

With regard to further embodiments, it is also possible that the neutral connection busbar 28 is disposed radially outside or between the phase connection busbars 27a, 27b, 27c.

With regard to further embodiments, the number of the bends 29 and the straights 30 may be smaller or larger than described afore. Also, the angular range of the accommodation spaces 26a to 26d and of the busbars 27a, 27b, 27c, 28 may be smaller or larger than described afore. Also, the number of connection sections 36a to 36e may vary with regard to a respectively implemented winding scheme.

Although a star connection of the coils is described in the afore-mentioned embodiments, the coils may be connected to form a delta connection. Therein, the second terminal conductors and the neutral connection busbar may be omitted and the number of ribs 25a to 25e and accommodation spaces 26a to 26d may be reduced.

## Claims

1. Electric drive (1) for a vehicle (100), comprising:
- an electric machine (2) having a stator (3), which comprises a stator core (12) with a longitudinal axis (23) and a stator winding (13), the stator winding (13) forming a winding head (14) at an axial face side (15) of the stator core (12);
- an inverter (6);
- supply busbars (8a-c) connected to the inverter (6); and
- a terminal device (9), comprising
- an insulation body (22) comprising a base (24) and a plurality of concentrically arranged ribs (25a-d) protruding from the base (24) into an axial direction and extending along a circumferential direction,
- a plurality of accommodation spaces (26a-c), each formed between a respective pair of radially adjacent ribs (25a-d), and
- a plurality of phase connection busbars (27a-c), each
- being arranged inside one of the accommodation spaces (26a-c) and insulated against the winding head (14) by the insulation body (22),
- having a cross-sectional area with opposing long sides (34) extending along the axial direction and with opposing short sides (35) connecting the long sides (34) and
- having a phase connection section (36d) connected to one of the supply busbars (8a-c), a coil connection section (36a-c) being connected to the stator winding (13) and a bar section (37a-d) extending between the phase connection section (36d) and the coil connection section (36a-c),
wherein the long sides (34) within the phase connection section (36ad) are larger than the long sides (34) within the bar section (37a-d) so that the phase connection section (36d) protrudes out of the accommodation space (26a-c), wherein the ribs (25a-c) form mounting spaces arranged with an axial distance to the bar section (37c) of a respective phase connection busbar (27a-c),
wherein the supply busbars (8a-c) are mounted inside the mounting spaces.

2. Electric drive according to claim 1, wherein
the ribs comprise protrusions (43a-c) extending into the axial direction away from the base (24) at angular positions in the circumferential direction, where the phase connection sections (36d) are arranged, the mounting spaces being formed within the protrusions (43a-c)

3. Electric drive according to claim 2, wherein
each protrusion (43a-c) has an axial deepening (44a-c) that forms the mounting space.

4. Electric drive according to any of the preceding claims, wherein
first to n-th accommodation spaces (26a-c) are provided, the accommodation spaces being arranged radially according to their numbering, wherein first to (n+1)-th ribs (25a-d) are provided, the i-th and the (i+1)-th rib forming the i-th accommodation space (26a-c) for all 1 ≤ i ≤ n,
wherein the first to j-th rib (25a-d) form the mounting space for the supply busbar (8a-c) connected to the phase connection busbar (27a-c) arranged inside the j-th accommodation space (26a-c) for all 1 ≤ j ≤ n,
wherein n, i, and j are integers, wherein n ≥ 2.

5. Electric drive according to claim 4, wherein
the phase connection section (36d) of the phase connection busbar (25a-c) arranged in the k-th accommodation space (26a-c) is adjacent to the phase connection section of the phase connection busbar (25a-c) arranged in the (k+1)-th accommodation space (26a-c) along a predefined circumferential direction for all 1 ≤ k ≤ (n-1),
wherein k are integers.

6. Electric drive according to any of the preceding claims, wherein
each phase connection busbar (27a-c) has a plurality of bends (29) and a plurality of straights (30), the bends (29) and straights (30) forming a polygonal shape of the phase connection busbar (27a-c).

7. Electric drive according to any of the preceding claims, wherein
each accommodation space (26a-c) has the shape of a sector of an annulus.

8. Electric drive according to any of the preceding claims, wherein the bends (29) touch one rib (25a-d) of the pair of adjacent ribs (25a-e) that form the accommodation space (26a-c) such that the phase connection busbar (27a-c) is fitted into the accommodation space (26a-c) by a retraction force.

9. Electric drive according to any of the preceding claims, wherein
the insulation body (22) comprises openings (38, 40) penetrating the base (24) at angular positions of the circumferential direction, where a respective coil connection section (36a-c) is arranged.

10. Electric drive according to claim 9, wherein
one rib (25b-d) of the pair of ribs (25a-d) forming a respective one of the accommodation spaces (25a-c) for the phase connection busbars (27a-c) forms radial recesses (39) such that the openings (38) are surrounded on three sides by the rib (25b-d).

11. Electric drive according to claim 9 or 10, wherein
the stator winding (13) comprises a plurality of coils, each coil being formed by a first terminal conductor (19a-c), a second terminal conductor (20) and further conductors realizing a current path from the first terminal conductors (19a-c) to the second terminal conductor (20), wherein a respective terminal conductor (19a-c, 20) extends in the axial direction away from the winding head (14) through one of the openings (38, 40) and is connected to one of the coil connection sections (36a-c, 36e).

12. Electric drive according to any of the preceding claims, wherein
the terminal device (9) comprises a neutral connection busbar (28), wherein one of the ribs (25a-c) and a further rib (25d) form a further accommodation space, inside which the neutral connection busbar (28) is arranged.

13. Electric drive according to claim 12, wherein
the insulation body (22) comprises openings (40) penetrating the base (24) at angular positions of the circumferential direction, where a respective coil connection section (36e) of the neutral connection busbar (28) is arranged, the openings (40) being preferably radially open towards a central opening (21) of the insulation body (22).

14. Electric drive according to claim 13, when being dependent on claim 11 wherein
the second terminal conductors (20) are connected to the neutral connection busbar (28) and extend straightly along the axial direction between the winding head (14) and the insulation body (22) to extend through the opening (40).

15. Electric drive according to any of the preceding claims, wherein
- the terminal device (9) further comprises at least three legs (45) extending from the base (24) into the axial direction away from the ribs (25a-e), each leg (45) having a cross-sectional area perpendicular to the axial direction with a, particularly radiused, edge (46b) pointing radially inwards and/or
- the base (24) comprises a plurality of through-holes (47a, 47b).
